# EUROPEAN PATENT APPLICATION

(11) **EP 4 492 279 A1**
(43) Date of publication of application: **15.01.2025**
(21) Application number: 23184998.5
(22) Date of filing: 12.07.2023
(51) Int. Cl.: G06F 40/253, G06F 40/35

(54) **DIALOGUE-SYSTEM, METHOD TO OPERATE SUCH A SYSTEM, A SOFTWARE SERVICE SYSTEM, COMPUTER SOFTWARE AND A COMPUTER READABLE MEDIUM**

(71) Applicant: Siemens Aktiengesellschaft, 80333 München (DE)
(72) Inventor: Johnson, Rebecca, 81739 München (DE); Villa, Iva, 80802 München (DE); Zabigailo, Maryna, 80797 München (DE)

(57) **Abstract**

The invention relates to a dialogue-system, e.g., an avatar-based-system, a method to operate the system, a software service system, computer software and a computer readable medium with an improved user experience.

This invention shows for the first time means to enable machines like dialogue-systems, especially avatar-based systems, to cover their lacks and/or inabilities and to hide their technical insufficiencies. The object is to keep users and/or clients on track in the virtual and/or augmented world while waiting for the end of processing of data and/or response of an avatar-based system. The application of a progress bar is not always helpful in that regard because more and more it is rather causing impatience than patience. According to the present invention, the dialogue-system behaves as if it would be completely busy with conversation with the user, while the dialogue-system indeed works and processes data and the output module gives out a so called "filler" only.

## Description

The invention relates to a dialogue-system, e.g., an avatar-based-dialogue-system, a method to operate the dialogue-system, a software service system, computer software and a computer readable medium with an improved user experience.

Dialogue-systems, like chatbots, are becoming increasingly popular online method for product and service providers to interact with their customers and/or users. Avatars are a form of software agent and may be referred to as chatbots, chatterbots, Artificial Conversational Entities, conversational agents, smart assistants, or other such terms. An avatar-based-dialogue-system is a system that serves as a steering tool and/or mimics conversation, either by voice-, language- and/or text-based input, with a user so as to provide them with information and services and also receive information from the user.

Previously, machines, for example robots in industry, were steered by a web-based controller-tool and/or user may have carried out this interaction via an app, for example on a mobile device or a website.

Meanwhile, cloud software architecture is mostly based on heavy processing of enormous amounts of data. While interacting with the avatar in industrial metaverse, the clients, machines, and/or users do have to be patient in order to receive the answer and/or results of processed data. Looking at games, during that spare time frames are frozen and progress bars appear until the end of the processing. This, however, is no appropriate user experience and does not emphasize human-machine conversation by giving the user a comfortable feeling while interacting with the dialogue-system.

Besides, there is a problem in workflow and concentration on human side. As soon as the dialogue-system freezes the frame and/or shows the progress bar the user will be thrown back to reality being conscious to be waiting in the real world, e.g., on his dirty chair. So, some or even a lot of soft skills that enable the user to interact fluently with the dialogue-system will be lost in the workflow during such a break. After that break the user has to adapt again to the requirements of being mentally in the virtual or augmented world and/or interact with the dialogue-system.

Additionally, if the user is being represented by an avatar in the virtual or augmented reality, after such a break the user has lost some or all of his emotions bringing about identification with the avatar. This is a disadvantageous effect overriding a lot of very specialized techniques to help the user to identify himself with the avatar and use the dialogue-system properly and time- and energy-efficient. It may take quite some time for the dialogue-system after that break to catch up with those emotions and identification level again. This leads to the effect that the whole dialogue-system will be a lot slower and less energy efficient. Besides, it will take a lot of time, that could be used in other ways.

This will even become more and more a problem, when avatars within the industrial metaverse and/or avatars are represented in a 3D environment like the 3D industrial metaverse, because the avatar-based-system will have a lag, where the user will have to wait, the workflow is stopped, and this waiting position of the user is visualized and made obvious by freezing a frame or showing a progress bar. As soon as that appears, the user is thrown back into the real world, his real environment and looses for the moment a lot of mental readiness to make conversation with machines. This skills have to be built up again after the break and this is cost-ineffective, time- and energy-consuming and disrupting the workflow.

It is therefore an object of the invention to keep the human user within the virtual and/or augmented world while waiting until the dialogue-system has processed, generated, memorized, received and/or other ways to obtain results and is able to give out specific answers. This even more since it has been proved and found out that it totally breaks immersion if you stare at a progress bar.

Accordingly, it is a subject of the present invention to provide a dialogue-system, comprising means of the output module or means being in connection to the output module to emit a filler during the time the dialogue-system is working and/or processing data for an output responding to the users' input and/or belonging to the conversation.

In simple words the invention is to replace the progress bar and/or a frozen frame indicating the work-in-progress of the machine, especially the dialogue-system by some filler-moves, -gestures and/or -words of the output module.

The output module of the dialogue-system may be robot, chatbot, screen, speakers, robot in a figure of barbie or some other icon, as well as any technical realizable combination thereof.

According to a preferred aspect of the invention the dialogue-system, is -e.g.,- an avatar-based-dialogue-system, where the dialogue-system comprises means - connected to or being integrated in - the output module - like speakers, screen with avatar, spoke-robot, 3D avatar, chatbot and so on...- to emit or give out a filler - like approving sounds, general statements, spoken words being somewhat related to the running conversation, questions, moaning, sighing, scratching of the head, rubbing of ears, laughter, some movement of the whole figure or parts like arms - during the time the dialogue-system is processing data and/or working on an output result belonging to the conversation.

Besides, it is another subject of the present invention to provide a method to operate a dialogue-system, the method comprising the steps of
- Starting a conversation between user and dialogue-system,
- Receiving by the dialogue-system of the users' input by input module,
- Reading out of the dialogue-system of the users' input by processor and/or web based and/or by Internet of Things "IoT" and/or by artificial intelligence "AI"
- Processing of data by the dialogue-system
- Emitting filler as output by the dialogue-system,
- Generating of results by the dialogue-system through processing,

- Giving out of calculated and processed output as result of AI data processing and operation of processors by dialogue-system through the output module.

According to a preferred embodiment of the method to operate a dialogue-system, the method comprises the steps of
- Starting conversation between user and dialogue-system through an input module,
- the dialogue-system receives input of the user by input module, like a microphone,
- Dialogue-system reads out input of the user by processor and/or web based and/or by Internet of Things "IoT" and/or by artificial intelligence "AI"
- Dialogue-system processes data
- optionally dialogue-system estimates the duration of data processing,
- optionally dialogue-system choses from a list of fillers the appropriate filler -being suitable, optionally alone or in combination,
- for the user,
- for time needed,
- for the conversation referred to,
- for place where conversation takes place,
- for time (winter- summer -christmas...) the conversation takes place,
- after selection the output module emits filler as long as foreseen and/or appropriate,
- After processing the dialogue-system shows results and/or gives out output as calculated results by dialogue-system through the output module, e.g., an avatar.

A software service system comprising the dialogue-system, computer software and a computer readable medium to operate and execute computer software are further subjects of the present invention.

The general idea of the invention is that the user stays emotionally linked with the dialogue-system during the time the dialogue-system works or processes data as long as the dialogue-system is keeping contact to the user, by a filler that is "buying time". This filler may - according to a preferred embodiment of the invention - be realized to fit timely in that break. It is this general idea of the present invention to improve the emotional user experience of the human machine interaction of a dialogue-system for example of an avatar-based-system like a chatbot system by enabling the chatbot to react like a human with appropriate fillers when there is nothing to say at a moment during conversation, where the dialogue-system is working on the conversation. Basically, the merit of the present invention is the creation of a dialogue-system, especially an avatar-based dialogue-system comprising a filler being given out by tool, a method and/or a feature of the output-module of the dialogue-system to draw the user's attention to something else but the fact that the dialogue-system is working, and the user is waiting, e.g., for data to be processed.

A "dialogue-system" as referred to in this description may be a conversation-system, a chatbot-system and/or a conversational agent "CA". This is a computer-based system intended to converse with a human. Dialogue-systems may employ one or more of text, speech, graphics, haptics, gestures, and/or other modes for communication on both the input and output channel. Modules of the dialogue-system are
- for example but not being limited to -
- input and output modules, processing modules, storage modules, access and connection to Internet of Things "IoT", computer with neuronal networks to apply artificial intelligence during the conversation, optional connections to different applications, smart phone applications and/or cloud-applications
- one or more processors being part of the above mentioned "processor-modules",
- the connection to a device being configured to work with and/or process artificial intelligence "AI",
- one or more automatic speech recognizer/generator
- one or more gesture recognizer/generator
- one or more handwriting recognizer/generator
- one or more natural language understanding unit/generating units
- one or more text-to-speech engine
- on or more talking heads like spoke robot or avatar.

According to one advantageous method to operate a dialogue-system according to the invention, the dialogue-system is able and configured to estimate the duration of data processing.

According to this method as disclosed here above, it is advantageous if the method further comprises the process step of preselecting an appropriate filler by the dialogue-system from one or more lists of fillers being stored in a memory unit.

The memory unit is storing lists of fillers within the dialogue-system and/or its output-module. Each list is containing different fillers rated and/or ranked under a different topic or item which represent a property of the filler, for example "this filler take 1,7 minutes of time". These lists may be object to a preselection carried out by the dialogue-system or combined with the dialogue-system, for example, web based.

Each filler may be subject to one or more of these lists, putting spot on different properties of the respective filler.

There are many ways to design a "filler" according to the present invention. Basically, the filler is the engine of the dialogue-system that keeps on interaction with the user while the dialogue-system is working on the users' input not having enough capacity to receive more input by the user. The filler causes the output module to respond to the user, keep him busy within the virtual or augmented reality but the filler does not give out the useful results of the data processing of the dialogue-system. The filler is emitting whatever the filler has stored in its memory and has been chosen on schedule or coincidentally by the dialogue-system, respective its output module.

Some examples:
Avatar - being e.g., one tool of the output module of the dialogue-system - chatters:
- Basically, yes, but...
- Let me have a look...
- let me see...
- I see what you mean, uummm....
- what could we do?
- I know,
- How come,
- isn't that something?
- I can't believe.

Another filler may change the mode of the output module into another mode while the system is calculating and processing data, characterized in that the "other" mode comprises a simple spoke robot with a voice output comprising - for example - sayings without meaning.

If the chatbot-system has as user interactor an avatar, it will buy time exactly the way it would occur in an interaction with humans. For example, simply by using the fillers such as "humming" and/or "hahing" and using words like the ones listed above. Such a system is - for example - called "avatar-based".

An avatar is the users' online alter ego, in other words the digital representation of a human in a virtual setting.

According to a higher level of fillers the avatar may ask simple questions, for example to make the impression that some further input is missing like:
- could you repeat that specific item in more detail ?
- did you realize right away it was a damage?
- did others comment on the action?
- has there been a question about the dog?
- can you believe that?
- isn't that something?

According to an advantageous embodiment of the invention the filler is showing gestures by the avatar, like
a) Gestures regarding the head and face
   - Scratch its head,
   - Look up in the sky
   - Roll the eyes,
   - representing gestures of reflecting and thinking
   - mimics
   - movements, e.g., of hands, tongue, lips, eyes...
   - touching its nose
   - Doing something with its hair, e.g., back hair, hair up,
   - Quickly typing something on a device like a smartphone
   - Writing something down
   - Shaking head left and right, up and down
   - Nodding and grinning
   - Gests regarding body, e.g., stretching, moving arms and legs, moving shoulders,
b) Gests regarding hands and nails
c) Moving around in the environment

According to another aspect of the invention the filler comprises speech, gestures, moaning, sighing, laughter, movements and/or mimics as well as any combination of the aforementioned outputs.

According to another advantageous embodiment of the invention the avatar technically has a list of different fillers, being rated according to specific properties. Those properties may relate to how much time the filler is buying and/or what tools the filler is operating, like speech only or speech combined with head movements.

The properties for selection of the filler may also relate to the tools of an avatar relating to time, date, weather, place and/or cultural/religious background of the user.

One kind of list with fillers may show a series of fillers that may be chosen because of the subject of the conversation, so the filler may have speeches about the general topic related to the input data like,
- do I get it right, your goal is to get the right food, to park the car in the shadow,

Another series of filler may show as a property to amuse the user. Therefore, the filler may select some key words of the aforementioned conversation or input of the user and tell a funny story, joke, pun and/or riddle about that. For that embodiment of the invention, the filler may have a connection to the IoT.

Another filler may have the property to be able to speak generally about the weather, politics, sports, preschool, school, education of children in general, actual news, cultural and/or religious events like Christmas, the season, plants, pets, fashion and so on...

Another filler may speak in combination of an action by the avatar, like a
- gesture, like nodding or shaking the head, looking upwards and saying, "nice wheather today in Oakland" or something like that,
- waving with the arms, scratching nose or rub ears, looking above and down, showing some pictures, objects
- dancing, playing music, singing, playing an instrument
- mimic like smiling, , telling what could theoretically be next to do...

For all fillers that refer to the place, the moment and the environment of the users stay or whereabouts the filler may be connected to sensors and/or systems to recognize those places and/or environments as well as cloud-applications and/or IoT to obtain background-information about it.

Another preferred embodiment may show the meeting of an avatar with further persons around. So, the avatar representing either the chatbot or the user may meet others in the virtual or augmented reality, asking them questions that just fill the time, like the following examples show:
- don't you feel hot today?
- how did the basket-ball team play last night?
- Do you have kids in school?
- oh god, Christmas time always is so hectic!

The dialogue-systems gets the other avatars in the virtual/augmented reality to answer the users' avatar in a comparable manner.

Thus, the user is amused by the avatars' conversation with other avatars during processing time of the dialogue-system without losing track to the virtual or augmented reality.

According to one embodiment of the inventio, the dialogue-system being realized as chatbot-system choses for example fillers being ranked according to the amount of time that they buy. Technically with a baseline on the waiting period for an output, a result and/or a data point, the fillers may be automatically preselected by the system on how much time they will "buy".

For that embodiment of the invention, the dialogue-system, before selecting the filler, operates a module and/or method to roughly estimate the time necessary for the specific processing procedure of that specific conversation.

In order to enable the system to select the appropriate filler, - according to one specific embodiment of the invention - it may be analyzed by the dialogue-system whether the user is rather aggressive, patient or other emotional state.

This analyzing may be done different ways, for example by analyzing the sound of its speech, the number of keys being used on a keyboard during a certain time, the pressure with which the keys are used etc.... Accordingly, a dialogue-system of that embodiment of the invention does have means for analyzing the users' emotions and feelings during the conversation, such as gesture, speech, tone recognition being integrated for example in a microphone, especially if combined with a processor being configurated to use NLP natural language processing to analyze the users speech together with it.

It is one of the main advantages of the present invention to replace and/or complete progress bars in avatar-based-systems by one or more fillers.

A "filler" as used in the present description may be a set of data and/or a software-code causing the dialogue-system, especially its output module, preferably having an avatar, to emit:
- general statements,
- spoken words being somewhat related to the running conversation,
- questions,
- moaning, sighing,
- gestures without a specific meaning like scratching the head, rub ears, grinning, laughter and so on.

This invention shows for the first time means to enable machines like dialogue-systems, especially avatar-based systems, to cover their lacks and/or inabilities and to hide their technical insufficiencies. The object is to keep users and/or clients on track in the virtual and/or augmented world while waiting for the end of processing of data and/or response of an avatar-based system. The application of a progress bar is not always helpful in that regard because more and more it is rather causing impatience than patience. According to the present invention, the dialogue-system behaves as if it would be completely busy with conversation with the user, while the dialogue-system indeed works and processes data and the output module gives out a so called "filler" only.

Independent of the grammatical term usage, individuals with male, female or other gender identities are included within the term.

## Claims

1. Dialogue-system, comprising means of the output module or means being in connection to the output module to emit a filler during the time the dialogue-system is working and/or processing data for an output responding to the users' input and/or belonging to the conversation.

2. Dialogue-system according to claim 1, having means to emit filler integrated in the output-module.

3. Dialogue-system according to one of claims 1 or 2, having means to emit filler being connected to the output-module.

4. Dialogue-system according to one of the previous claims, comprising a chatbot-system.

5. Dialogue-system according to one of the previous claims, comprising a conversational agent "CA".

6. Dialogue-system according to one of the previous claims, being avatar-based.

7. Dialogue-system according to one of the previous claims, where the filler comprises speech, gestures, moaning, sighing, laughter, movements and/or mimics as well as any combination of the aforementioned outputs.

8. Dialogue-system according to one of the previous claims, the avatar technically has a list of different fillers, being listed and/or rated according to specific properties.

9. Dialogue-system according to one of the previous claims, having a baseline on the waiting period for an output.

10. Dialogue-system according to claim 9, using the baseline for preselection of a suitable filler taking or buying the amount of time needed.

11. Method to operate a dialogue-system, the method comprising the steps of
- Starting a conversation between user and dialogue-system,
- Receiving by the dialogue-system of the users' input by input module,
- Reading out of the dialogue-system of the users' input by processor and/or web based and/or by Internet of Things "IoT" and/or by artificial intelligence "AI"
- Processing of data by the dialogue-system
- Emitting filler as output by the dialogue-system,
- Generating of results by the dialogue-system through processing,
- Giving out of calculated and processed output as result of AI data processing and operation of processors by dialogue-system through the output module.

12. Method to operate a dialogue-system according to claim 11, where the dialogue-system is able and configured to estimate the duration of data processing.

13. Method to operate a dialogue-system according to one of claims 11 or 12, comprising the process step of preselecting an appropriate filler by dialogue-system from a list of fillers being stored in a memory unit.

14. A software-service system comprising a dialogue-system according to one of claims 1 to 10.

15. Computer software which, when executed by a computer, causes the computer to provide a dialogue-system using a filler by the output module as claimed in any of claims 1 to 10.

16. Computer software which, when executed by a computer, causes the computer to perform a method according to one of claims 11 to 14.

17. A computer-readable medium comprising the computer software of claim 15 or 16.
